Europäisches Patentamt

European Patent Office

Office européen des brevets

(11) Veröffentlichungsnummer: **0 014 396**
A1

## EUROPÄISCHE PATENTANMELDUNG

(21) Anmeldenummer: 80100392.2

(22) Anmeldetag: 25.01.80

(51) Int. Cl.³: **G 01 N 25/14**
**G 01 N 7/00**

(30) Priorität: 03.02.79 DE 2904135

(43) Veröffentlichungstag der Anmeldung:
20.08.80 Patentblatt 80/17

(84) Benannte Vertragsstaaten:
DE FR GB IT NL

(71) Anmelder: Mahlo GmbH & Co. KG
Donaustrasse 7
D-8424 Saal/Donau(DE)

(72) Erfinder: Beckstein, Hellmut, Dr.-Ing.
Dr.-Franz-Schmitz-Strasse 15
D-8403 Bad Abbach(DE)

(74) Vertreter: Reinländer & Bernhardt Patentanwälte
Orthstrasse 12
D-8000 München 60(DE)

(54) Verfahren und Vorrichtung zur prozessmässigen Messung einer Gaskomponente in einem Gasgemisch.

(57) Bei einem Verfahren zur prozessmässigen Messung einer Gaskomponente in einem Gasgemisch wird eine Teilmenge des Gasgemisches in ein verschliessbares Messgerät (1) gebracht, werden Temperatur, durch Temperaturfühler (7), und Druck, durch Druckfühler (6), ermittelt, wird nach dem
Verschließen des Gefäßes dieses auf eine Temperatur unterhalb der Sättigungstemperatur einer der beiden Gaskomponenten abgekühlt, werden nach der Abkühlung erneut Temperatur und Druck ermittelt und wird aus diesen zwei Wertepaaren einschließlich des Sättigungsdrucks bei der zweiten Temperatur der Volumen-Prozentsatz der Gaskomponente errechnet.

FIG. 1

EP 0 014 396 A1

## Verfahren und Vorrichtung zur prozeßmäßigen Messung einer Gaskomponente in einem Gasgemisch

Die Erfindung bezieht sich auf ein Verfahren und eine Vorrichtung zur prozeßmäßigen Messung einer Gaskomponente in einem Gasgemisch, z.B. des Luftgehalts in Wasserdampf oder von Trichlorperäthylen in Luft. In diesem Gasgemisch kann die interessierende Gaskomponente erwünscht oder auch unerwünscht in kleinerem oder auch größerem Umfang enthalten sein. In der Praxis ist es jedenfalls in manchen Fällen von erheblicher Bedeutung, die eine Gaskomponente messen zu können, um gegebenenfalls durch Anreichern oder Abreichern ein bestimmtes Mischungsverhältnis aufrechtzuerhalten oder gegebenenfalls durch spezielle Abreicherungsverfahren dafür zu sorgen, daß bestimmte Maximalkonzentrationen nicht überschritten werden, beispielsweise wegen Gesundheitsgefährdung, Explosionsgefahr oder zur Sicherstellung von bestimmten Prozeßparametern. Beispielsweise wird beim Farbentwickeln von bedrucktem Textilgewebe in Dämpfern gefordert, daß der Luftgehalt bei höchstens 1 Vol.-% liegt, da sich sonst die Farben verfälschen können.

Zur Messung des Luftgehalts von Dampf wird derzeit folgendes manuelle Verfahren durchgeführt. In ein mit kaltem Wasser gefülltes, oben geschlossenes Glasgefäß wird eine bestimmte Menge Dampf eingelassen. Der Dampf kondensiert in dem bereits vorhandenen Wasser und die Luft steigt nach oben. An einer entsprechend geeichten Skala kann dann die Wasser-Luft-Grenze abgelesen werden, so daß hieraus der Volumen-Prozentsatz erhalten wird. Dieses Verfahren hat unter anderem den Nachteil, daß es lange Meßzeiten erfordert, daß ein umständliches Wiederfüllen des Gefäßes mit Wasser notwendig ist, daß zur Meßwertgewinnung das Mitwirken einer Person notwendig ist und daß sich somit keine automatische Regelung durchführen läßt. Schließlich bereitet es auch erhebliche Schwierigkeiten, das zur Messung herangezogene Dampfvolumen korrekt anzugeben.

Der Erfindung liegt die Aufgabe zugrunde, ein Verfahren und eine Vorrichtung der eingangs erwähnten Art zu schaffen, die selbsttätig ablaufen, d.h. keine Mitwirkung von Bedienungspersonal erfordern, sich gut für Prozeßüberwachungen eignen, quasi-kontinuierliche Meßwerte liefern und zusammen mit selbsttätigen Reglern arbeiten können.

Gelöst wird diese Aufgabe dadurch, daß eine Teilmenge des Gasgemisches in ein verschließbares Meßgerät gebracht wird, daß Temperatur und Druck ermittelt werden, daß nach dem Verschließen des Gefäßes dieses auf eine Temperatur unterhalb der Sättigungstemperatur einer der beiden Gaskomponenten abgekühlt wird, daß nach der Abkühlung erneut Temperatur und Druck ermittelt werden und daß aus diesen zwei Wertepaaren einschließlich des Sättigungsdrucks bei der zweiten Temperatur der Volumen-Prozentsatz der Gaskomponente errechnet wird.

Zur Durchführung des Verfahrens wird ein formstabiles Meßgefäß eingesetzt, das je einen dicht verschließbaren Ein- und Auslaß, ein Thermometer und ein Manometer enthält. Zur Messung läßt man aus dem Dampfbehälter, gegebenenfalls über ein Drosselventil, das Dampf/Luftgemisch langsam durch das Meßgefäß strömen, bis alle seine Teile einschließlich Thermometer und Manometer die Dampftemperatur angenommen haben. Nun werden Temperatur und Druck abgelesen, sodann werden Ein- und Auslaß verschlossen. Nun läßt man das komplette Meßgefäß abkühlen. Hierbei kondensiert ein erheblicher Teil des Dampfes, der als Wasser nur noch ein geringes Volumen einnimmt. Es entsteht also ein Unterdruck. Dieser ist abhängig von der Temperatur des abgekühlten Gemisches sowie dem Gehalt von Luft im eingeströmten Dampf/Luftgemisch. Nunmehr werden wiederum Temperatur und Druck abgelesen. Verrechnet man nun die gewonnenen Werte in geeigneter Weise miteinander, so stellt das Ergebnis unmittelbar den Volumen-Prozentsatz Luft im Wasserdampf dar.

-3-

Die Erfindung wird beispielhaft anhand der Zeichnung beschrieben, in der sind

Fig. 1 ein Pinzipschaltbild der Meßvorrichtung,

Fig. 2 ein Schaltbild einer für Prozeßüberwachungen geeigneten Meßvorrichtung,

Fig. 3 ein Schaltbild einer Auswertschaltung in analoger Technik,

Fig. 4 ein Zeitdiagramm zu der Schaltung nach Fig. 3 und

Fig. 5 ein Prinzipschaltbild eines digital arbeitenden Microcomputers.

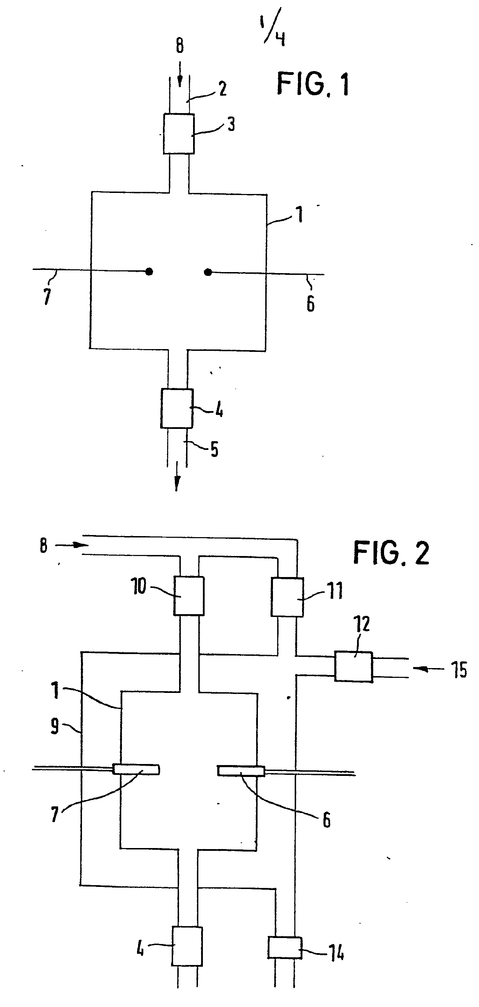

Gemäß Fig. 1 strömt das zu messende Dampf/Luftgemisch 8 durch die Eingangsleitung 2 und das geöffnete Einlaßventil 3 in das Meßgerät 1 und durch das ebenfalls geöffnete Auslaßventil 4 zur Ausgangsleitung 5 hinaus. Nach einer gewissen, aufbauspezifischen, fest vorgebbaren Zeit, wenn alle Teile des Meßgefäßes die Dampftemperatur angenommen haben, werden die Ventile 3 und 4 geschlossen sowie Druck $p_1$ und Temperatur $T_1$ gemessen. Hierzu dienen Druckfühler 6 (p) und Temperaturfühler 7 ($\vartheta$). Nach einer weiteren, ebenfalls fest vorgebbaren Zeitspanne ist das Meßgefäß soweit abgekühlt, daß der Wasserdampf weitgehend kondensierte. Nun werden erneut Druck $p_2$ und Temperatur $T_2$ gemessen. Aus diesen Werten, zusammen mit dem Sättigungsdruck von Wasserdampf $p_{W2}$ für $T_2$ – entnommen aus einschlägigen Tabellen –, kann der Volumenanteil Luft $V_L$ des einströmenden Dampf/Luftgemisches errechnet werden nach der Formel

$$V_L = \frac{p_2 - p_{W2}}{p_1} \cdot \frac{T_1}{T_2} \, .$$

Hierbei ist lediglich vernachlässigt, daß der kondensierte Wasserdampf ein gewisses Volumen einnimmt und somit den Druck $p_2$ geringfügig (Größenordnung: %/oo) verfälscht.

Gemäß Fig. 2 strömt das zu messende Dampf/Luftgemisch 8 während der Füllphase durch die geöffneten Ventile 10 und 11 in das Meßgefäß 1 und das das Meßgefäß umgebende

Heiz/Kühlgefäß 9 bzw. durch das geöffnete Ventil 4 und den
festeingestellten Drosselhahn 14 heraus. Das Kühlmittelventil 12 ist zunächst geschlossen. Während der Kühlphase
werden die Dampfventile 10, 11 und 4 geschlossen und
das Kühlmittelventil 12 geöffnet, so daß Kühlmittel 15,
z.B. Wasser, durch das Heiz/Kühlgefäß 9 strömt und das
Meßgefäß 1 samt Inhalt abkühlt. Die Werte für Druck bzw.
Temperatur werden am Ende der Füllphase und dann nochmals
am Ende der Kühlphase ermittelt, wobei der Einsatz elektrischer Fühler 6 und 7 mit nachfolgenden elektronischen
Speicherschaltungen zweckmäßig ist. Während der Füllphase
kann dann mit elektronischen Rechenschaltungen die Volumen-
Konzentration errechnet und dann solange angezeigt werden,
bis ein neuer Wert errechnet wurde.

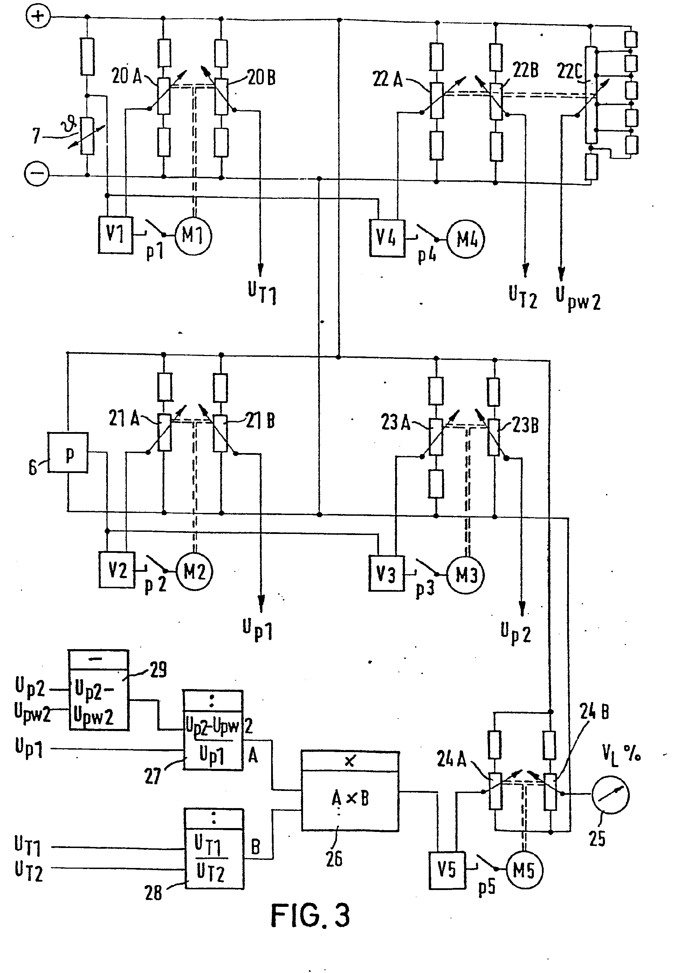

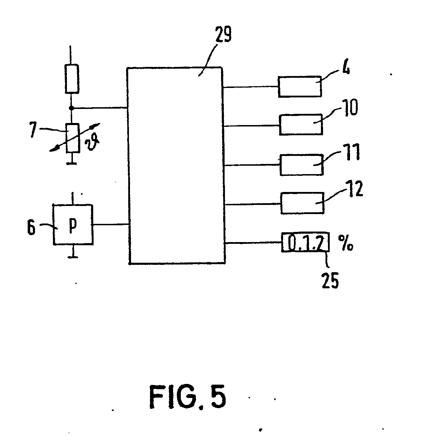

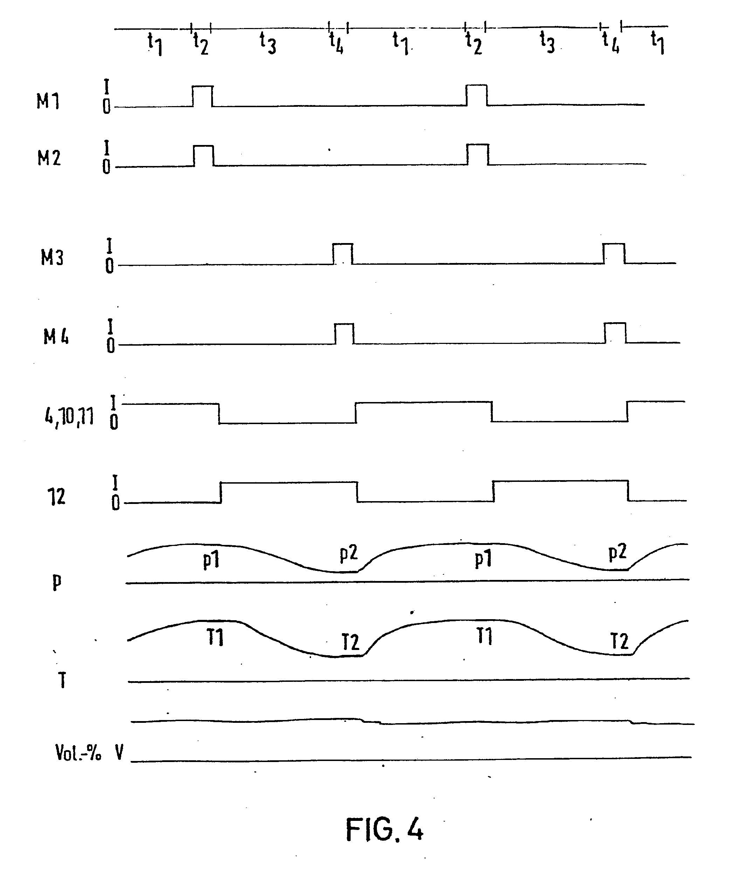

Gemäß Fig. 3 und 4 schaltet ein (nicht gezeigtes) Programmschaltwerk, das beispielsweise von einem Synchronmotor
angetrieben wird, taktweise Magnetventile wie auch Motoren
für die nachfolgend beschriebenen Nachlaufschaltungen ein
und aus. Die zeitliche Abfolge des Programms ist so festgelegt, daß während der Zeit t1 (=Auswerten + Füllen) einschließlich der Zeit t2 (=Messen bei $T_1$) die Magnetventile
4, 10 und 11 geöffnet und das Magnetventil 12 geschlossen
sind. Während der Zeit t3 (=Kühlen) und der Zeit t4 (=Messen
bei $T_2$) sind die Magnetventile 4, 10 und 11 geschlossen
und ist das Magnetventil 12 geöffnet. Weiterhin sind die
beiden Nachlaufmotoren M1 und M2 während der Zeit t2
(=Messen bei $T_1$) angeschaltet, während der übrigen Phasenzeiten blockiert. In sinngemäß gleicher Weise sind während
der Zeit t4 (=Messen bei $T_2$) die Nachlaufmotoren M3 und M4
angeschaltet, während der übrigen Phasenzeiten blockiert.

Während der Phasenzeit t2 (= Messen bei $T_1$) liefert der
Temperaturfühler 7, beispielsweie ein Pt-100-Widerstand,
eingebaut in eine Brückenschaltung mit Nachlaufdoppelpotentiometern 20A und 20B und einem Verstärker V1 mit
nachgeschaltetem Motor M1 am Schleifer des Potentiometers
20B eine Spannung $U_{T_1}$, die der absoluten Temperatur proportional ist. Der Kontakt p1 am Motor M1 ist nur während dieser Meßphase geschlossen, kann also nur während dieser Phase laufen. Somit wird nach dem Ende dieser Meßphase die Spannung $U_{T1}$ gespeichert.

Das sinngemäß Gleiche läuft zur gleichen Zeit hinsichtlich des Druckfühlers 6 ab. Dieser liefert eine zum Absolutdruck proportionale Spannung. Der Programmschaltwerkkontakt p2 hebt während dieser Meßphase auch die Blockierung des Motors M2 auf, so daß über den Verstärker V2 und den Motor M2 das Nachlaufdoppelpotentiometer 21A und 21B in eine druckproportionale Stellung gebracht wird. Entsprechende Spannungsversorgung für Potentiometer 21B vorausgesetzt, kann am Schleifer dieses Potentiometers die druckproportionale Spannung $U_{p1}$ entnommen werden.

Während der zweiten Meßphase t4 (= Messen bei $T_2$) wird die nunmehrige Temperatur über eine gleichartige Nachlaufschaltung mit dem Verstärker V4, dem Motor M4, dem Scharfschaltkontakt p4 und dem Nachlauf-3-fach-Potentiometer 22A, 22B und 22C erreicht. Am Schleifer des Potentiometers 22B kann dann die temperaturproportionale Spannung $U_{T2}$ abgenommen werden. Das Potentiometer 22C ist nichtlinear so ausgebildet, daß bei der jeweiligen, temperaturbezogenen Schleiferstellung eine Spannung abgenommen werden kann, die dem Wasserdampf-Sättigungsdruck bei der Temperatur $U_{pW2}$ proportional ist.

Schließlich wird ebenso, wie weiter oben beschrieben, mit Hilfe der Verstärkerschaltung V3, des Nachlaufmotors M3, des Scharfschaltkontakts p3 und des Nachlaufdoppelpotentiometers 23A und 23B am Schleifer des Potentiometers 23B eine druckproportionale Spannung $U_{p2}$ gewonnen.

Der untere Teil der Fig. 3 zeigt die Schaltbausteine, durch welche die Spannungen miteinander verrechnet werden, und zwar einen Multiplikationsbaustein 26, zwei

Divisionsbausteine 27 und 28 und einen Subtraktionsbaustein
28, die Subtraktion, Division und Multiplikation durchführen. Am Ausgang des Multiplikationsbausteins 26 ergibt
sich die gesuchte Spannung für den Volumenanteil Luft $V_L$
innerhalb des Gemisches. Damit dieser Wert stets zur Verfügung steht, auch wenn ein neuer Meßzyklus bereits
durchgeführt wird, ist eine gleichartige Nachlaufschaltung
mit einem Verstärker V5, einem Scharfschaltkontakt p5,
einem Motor M5 und einem Nachlaufdoppelpotentiometer
24A, 24B, wie oben beschrieben, vorgesehen, so daß schließlich ein am Schleifer des Potentiometers 24B angeschlossenes
Anzeigeinstrument 25 dauernd anzeigt.

Es können auch andere Speicher, wie z.B. Kondensatoren in
Sample-and-Hold-Schaltungen, oder auch Flip-Flop-Speicher
(Analog-Digital-Wandler schreibseitig vor den Flip-Flops,
Digital-Analog-Wandler leseseitig hinter den Flip-Flops)
eingesetzt werden.

Der Microcomputer 29 der Fig. 5 wird so programmiert, daß
die Magnetventile 4, 10, 11 und 12 nach den jeweils gleichen
Zeit-Intervallen auf- bzw. zugeschaltet werden, wie weiter
oben bei Fig. 4 beschrieben. Die Meßwerte, digitalisiert
und eventuell aufbereitet, werden in Halbleiter-Speichern
(RAMs) abgelegt, während das Wertepaar Sättigungsdruck
der kondensierenden Gaskomponente und zugehörige Temperatur
in einem PROM festgehalten sind. Als mit dem Microcomputer
leicht zu realisierende Variante können die Taktzeiten auch
flexibel gehalten und somit raschere Meßzyklen ermöglicht
werden. Dazu kann der Microcomputer die Meßwerte nicht nur
während der Phasen t2 und t4 erfassen, sondern bereits
während der Zeiten t1 und t2. Bleiben dann die Änderungen
der jeweils abgefragten Meßwerte innerhalb bestimmter
Intervallzeiten unter einer bestimmten Schwelle, können
diese Werte, also unabhängig von den festen Taktzeiten,
gespeichert werden und kann    sogleich automatisch die
nächste Phase gestartet werden.

64/23 EU

Orthstraße 12
D-8000 München 60

Mahlo GmbH & Co. KG
8424   Saal/Donau

## P a t e n t a n s p r ü c h e

1.   Verfahren zur prozeßmäßigen Messung einer Gaskomponente
in einem Gasgemisch, dadurch gekennzeichnet, daß eine Teilmenge des Gasgemisches in ein verschließbares Meßgerät
gebracht wird, daß Temperatur ($T_1$) und Druck ($p_1$) ermittelt
werden, daß nach dem Verschließen des Gefäßes dieses auf
eine Temperatur unterhalb der Sättigungstemperatur einer
der beiden Gaskomponenten abgekühlt wird, daß nach der
Abkühlung erneut Temperatur ($T_2$) und Druck ($p_2$) ermittelt
werden und daß aus diesen zwei Wertepaaren einschließlich
des Sättigungsdrucks ($p_{K(T2)}$) bei der zweiten Temperatur ($T_2$)
der Volumen-Prozentsatz der Gaskomponente errechnet wird.

2.   Verfahren nach Anspruch 1, dadurch gekennzeichnet, daß
der Volumenanteil der gasförmig bleibenden, also bei der
Abkühlung nicht auskondensierenden Gaskomponente, nach
folgender Formel berechnet wird:

$$V_G = \frac{p_2 - p_{K(T2)}}{p_1} \cdot \frac{T_1}{T_2}$$

3.   Verfahren nach den Ansprüchen 1 oder 2,  bei dem die
kondensierende  Gaskomponente Wasserdampf und die gasförmig
bleibende Gaskomponente Luft sind, dadurch gekennzeichnet,
daß der Volumen-Prozentsatz der Luft im Wasserdampf ermittelt
wird.

4. Verfahren nach einem der Ansprüche 1 bis 3, dadurch gekennzeichnet, daß der ermittelte Istwert mit einem Sollwert verglichen und zur Regelung der Konzentration der Gaskomponente verwendet wird.

5. Verfahren nach Anspruch 3, dadurch gekennzeichnet, daß der Luftgehalt in Wasserdampf bestimmt wird, wobei zur Heizung des Meßbehälters das Meßgas selbst und zur Kühlung Leitungswasser verwendet wird.

6. Vorrichtung zur Durchführung des Verfahrens nach einem der Ansprüche 1 bis 5, dadurch gekennzeichnet, daß das Meßgefäß Temperatur- und Druckfühler enthält.

7. Vorrichtung nach Anspruch 6, gekennzeichnet durch eine Einrichtung zur Programmsteuerung zum Öffnen und Schließen der Verschlüsse des Meßgefäßes und durch eine Auswerteinrichtung zum selbsttätigen Ermitteln des Volumen-Prozentsatzes für eine Gaskomponente.

8. Vorrichtung nach Anspruch 6 oder 7, gekennzeichnet durch eine Einrichtung zum Kühlen und Heizen des Meßgefäßes derart, daß es mit Kühlgas oder Kühlflüssigkeit bzw. Heizgas oder Heizflüssigkeit ganz oder teilweise umspült wird, wobei als Heiz- oder Kühlmedium gegebenenfalls das zu messende Gasgemisch dienen oder mindestens beteiligt sein kann.

9. Vorrichtung nach Anspruch 6 oder 7, dadurch gekennzeichnet, daß das Meßgefäß mit Peltier-Elementen oder Wärmepumpen versehen ist.

10. Vorrichtung nach einem der Ansprüche 6 bis 9, gekennzeichnet durch eine elektronische Einrichtung zur Programmsteuerung und Auswertung, die Speicher, vorzugsweise motorbetriebene Potentiometer, oder Kondensatoren enthält oder aus einem Microcomputer besteht, wobei als temporäre Speicher Flip-Flops oder RAM, letztere in Verbindung
mit einem Microprozessor, verwendet sind und wobei eine
Einrichtung zur   Programmsteuerung mit flexiblen
Zeiten, bei der sich die Zeiträume aufgrund der berechneten Änderungsgeschwindigkeit von Meßwerten ergeben,
einsetzbar    ist.

1/4

FIG. 1

0014396

FIG. 2

0014396

FIG.3

FIG. 5

FIG. 4

Europäisches Patentamt

**EUROPÄISCHER RECHERCHENBERICHT**

Nummer der Anmeldung

**EP 80 10 0392**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 002 372 (W.L. BULKLEY et al.) <br><br> * Spalte 3, Zeile 57 - Spalte 4, Zeile 2; Spalte 4, Zeilen 32-40; Figur 2 * <br><br> -- | 1,6-8 |
| | DE - A - 1 760 901 (FAMATEX GmbH, FABRIK FÜR TEXTILAUSRUSTUNGS-MASCHINEN) <br><br> * Seite 1, Zeile 1 - Seite 2, Zeile 7 * <br><br> -- | 1,3 |
| | FR - A - 1 113 328 (TOOTAL BROAD-HURST LEE COMP. LTD.) <br><br> * Seite 1, rechte Spalte, Zeile 4 - Seite 2, linke Spalte, Zeile 29; Seite 3, rechte Spalte, Zeile 1 - Seite 5, linke Spalte, Zeile 19; Figuren 1-3 * <br><br> -- | 1,3,5, 8 |
| | DE - C - 661 636 (C.A. HARTUNG) <br><br> . * Seite 1, linke Spalte, Zeile 1 - Seite 2, rechte Spalte, Zeile 83; Figuren * <br><br> -- | 1,6 |
| | DE - A - 2 235 853 (BÜTTNER-SCHIL-DE HAAS AG) <br><br> * Seite 5, Zeilen 8-10 * <br><br> -- | 9 |
| A | US - A - 3 174 327 (S. HANSEN) <br><br> * Spalte 1, Zeilen 9-30; Spalte 1, Zeile 66 - Spalte 2, Zeile 24 * | 1 |

**KLASSIFIKATION DER ANMELDUNG (Int.Cl ³)**

G 01 N 25/14
7/00

**RECHERCHIERTE SACHGEBIETE (Int. Cl. ³)**

G 01 N 25/14
25/60
7/00
33/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-05-1980 | ANTHONY |